# EUROPÄISCHE PATENTSCHRIFT

(11) **EP 1 763 639 B1**
(45) Veröffentlichungstag und Bekanntmachung des Hinweises auf die Patenterteilung: **24.02.2010**
(21) Anmeldenummer: 05741881.6
(22) Anmeldetag: 19.05.2005
(51) Int. Cl.: F16B 11/00

(54) **BEFESTINGUNGSANORDNUNGEN& xA;**
FIXING DEVICES
DISPOSITIFS DE FIXATION

(30) Priorität: 29.06.2004 DE 102004031551; 07.07.2004 DE 202004010375 U
(43) Veröffentlichungstag der Anmeldung: 21.03.2007
(73) Patentinhaber: A. RAYMOND ET CIE, 38000 Grenoble (FR)
(72) Erfinder: BREMONT, Michel, F-01170 Gex (FR); PAPIRER, Yves, F-68170 Rixheim (FR); HAENSEL, Mathias, 79595 Rümmingen (DE); TAKENAKA, Yasuki, 251-0044 Fujisawa-City (JP)
(74) Vertreter: Rüttgers, Joachim
(86) Internationale Anmeldenummer: PCT/EP2005/005426
(87) Internationale Veröffentlichungsnummer: WO 2006/002715

(56) Entgegenhaltungen:
- DE-U1- 29 722 126

## Beschreibung

Die Erfindung betrifft Befestigungsanordnungen gemäß den Oberbegriffen der Patentansprüche 1, 2 und 4.

DE 297 22 126 U1 offenbart derartige Befestigungsanordnungen, bei denen in eine glattwandige zylinderförmige Aufnahmevertiefung ein entsprechend ausgeformter Presskörper eingefügt ist. Der Presskörper muss zum Verbinden mit dem Befestigungsteil entweder nachteiligerweise angeschmolzen oder dimensionsmäßig so genau gefertigt werden, dass er ohne die Gefahr von Brüchen aufgrund zu hoher Kraftbeaufschlagung über seinen gesamten äußeren Umfang kraftschlüssig verbunden in die Aufnahmevertiefung eingefügt werden kann. Dies ist jedoch fertigungstechnisch in der Praxis nur mit gewissen Schwierigkeiten zu bewerkstelligen.

Eine weitere Befestigungsanordnung ist aus DE 196 45 000 A1 bekannt. Diese Befestigungsanordnung weist ein Befestigungsteil auf, das über einen eine plane außenseitige Oberfläche aufweisenden Befestigungsabschnitt verfügt. Weiterhin ist die Befestigungsanordnung mit einem Schmelzkleber ausgestattet, der nach Anschmelzen bei einer verhältnismäßig niedrigen Temperatur als eine Klebeschicht an der planen außenseitigen Oberfläche anhaftet sowie zum Befestigen der somit vorkonfektionierten Befestigungsanordnung mit einem Träger bei einer verhältnismäßig hohen Temperatur aufschmelzbar ist. Zwar sind mit dieser Befestigungsanordnung Anbauteile zuverlässig mit einem Träger verbindbar, allerdings besteht bei nicht exakt eingehaltenen Bedingungen beim Anschmelzen des Schmelzklebers eine gewisse Gefahr, dass der Schmelzkleber entweder bei einer zu niedrigen Anschmelztemperatur nur unzureichend an der planen außenseitigen Oberfläche anhaftet und unter Umständen beispielsweise beim Transport der Befestigungsanordnungen als Schüttgut abplatzt oder der Schmelzkleber bei einer zu hohen Anschmelztemperatur bereits aktiviert wird und beim Verbinden zum Herstellen einer Klebeverbindung zwischen der Befestigungsanordnung und einem Träger eine nur unzureichende Festigkeit erzielt wird.

Der Erfindung liegt daher die Aufgabe zugrunde, Befestigungsanordnungen der eingangs genannten Arten anzugeben, bei dehen der Presskörper fertigungstechnisch einfach herzustellen und unproblematisch mit dem Befestigungsteil verbindbar ist.

Diese Aufgabe wird bei Befestigungsanordnungen der eingangs genannten Arten erfindungsgemäß mit den kennzeichnenden Merkmalen der Patentansprüche 1, 2 und 4 gelöst.

Aufgrund der in den kennzeichnenden Teilen der Patentansprüche 1, 2 und 4 angegebenen Merkmale ist nunmehr auch bei gegenüber dem Innendurchmesser der Aufnahmevertiefung im Außendurchmesser kleiner dimensionierten Presskörpern bei unproblematischen Einfügbarkeit derselben in der Aufnahmevertiefung ein sicherer Halt gewährleistet.

Eine weitere zweckmäßige Ausgestaltung der Erfindung gemäß dem Patentanspruch 2 ist Gegenstand des Unteranspruches 3.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Schnittansicht ein erstes Ausfüh- rungsbeispiel einer erfindungsgemäßen Befestigungsan- ordnung mit einem Befestigungsteil und einem Presskörper vor dessen Einfügen in eine Aufnahmevertiefung, das als Haltestruktur eine Anzahl von Randrippen aufweist,
- Fig. 2: in einer perspektivischen Ansicht das erste Ausführungs- beispiel in einer vorkonfektionierten Anordnung mit in die Aufnahmevertiefung eingefügtem Presskörper,
- Fig. 3: in einer perspektivischen Schnittansicht das erste Ausfüh- rungsbeispiel nach einem Aufschmelzen der Presskörpers in einer festen Verbindung mit einem Träger,
- Fig. 4: in einer perspektivischen Schnittansicht eine Befestigungs- anordnung (nicht Teil der beanspruchten Erfindung) mit ei- nem Befestigungsteil und einem Presskörper vor dessen Einfügen in eine Aufnahmevertiefung, das als Haltestruktur einen Klebepunkt aufweist,
- Fig. 5: in einer perspektivischen Schnittansicht ein zweites Aus- führungsbeispiel, bei dem in einer Aufnahmevertiefung ei- nes Befestigungsteiles ein Haltestift einer Haltestruktur ein- gefügt ist, der in eine in einen Presskörper eingebrachte Stiftausnehmung einführbar ist, und
- Fig. 6: in einer perspektivischen Schnittansicht ein drittes Ausfüh- rungsbeispiel einer erfindungsgemäßen Befestigungsan- ordnung mit einem Befestigungsteil, in dessen Aufnahme- vertiefung ein Presskörper eingefügt und in dieser Anord- nung von einer Haltestruktur mit mit einem Ringbund in Eingriff stehenden Haltezungen gehalten ist.

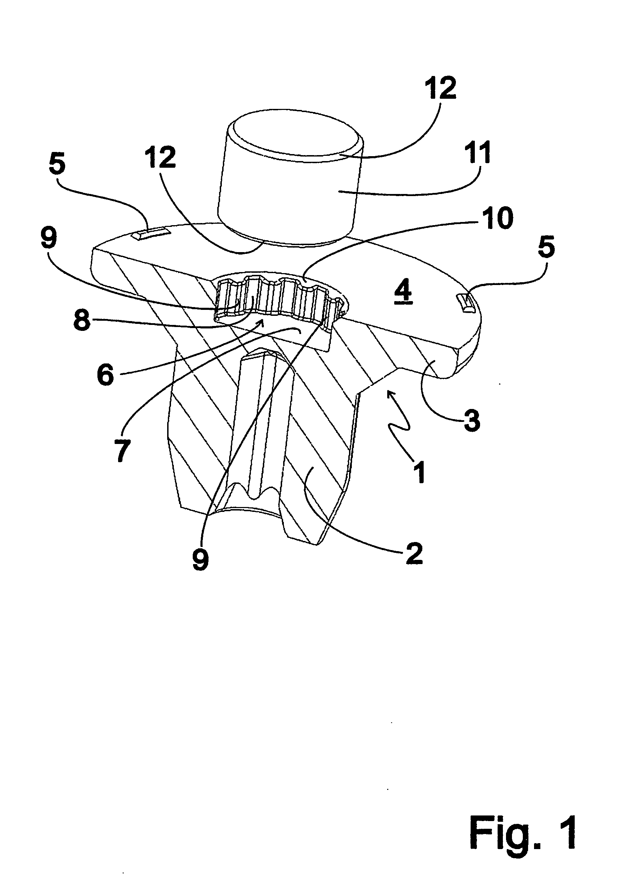

Fig. 1 zeigt in einer perspektivischen Schnittansicht ein erstes Ausführungsbeispiel einer erfindungsgemäßen Befestigungsanordnung mit einem Befestigungsteil 1, das über einen länglichen Schaftabschnitt 2 und als Befestigungsabschnitt über einen mit dem Schaftabschnitt 2 in Verbindung stehenden abgeflachten Bundteller 3 mit einem rundlichen Umfang verfügt. Der Schaftabschnitt 2 ist länglich ausgebildet und dient zum Befestigen eines in Fig. 1 nicht dargestellten Anbauteiles, während der Bundteller 3 eine von dem Schaftabschnitt 2 wegweisende, in diesem Ausführungsbeispiel plane außenseitige Oberfläche 4 aufweist, von der sich randseitig eine Anzahl von über die Oberfläche 4 vorstehenden Abstandshalter 5 erheben.

In etwa in der Mitte des Bundtellers 3 ist eine Aufnahmevertiefung 6 vorhanden, die in Richtung der planen außenseitigen Oberfläche 4 offen ist. Die Aufnahmevertiefung 6 weist eine flache bodenseitige Innenwand 7 und eine rundlich umlaufende seitliche Innenwand 8 auf, an der als Haltestruktur eine Anzahl von radial nach innen vorstehende Randrippen 9 ausgebildet sind. Der an die plane außenseitige Oberfläche 4 angrenzende Rand der Aufnahmevertiefung 6 ist als nach innen angeschrägte Konusfläche 10 ausgebildet.

Weiterhin ist das erste Ausführungsbeispiel gemäß Fig. 1 mit einem in Gestalt eines im wesentlichen zylindrischen Presskörpers 11 ausgebildeten Schmelzkleber ausgestattet, der an seinen stirnseitigen Rändern mit nach außen angeschrägten Konusflächen 12 ausgebildet ist.

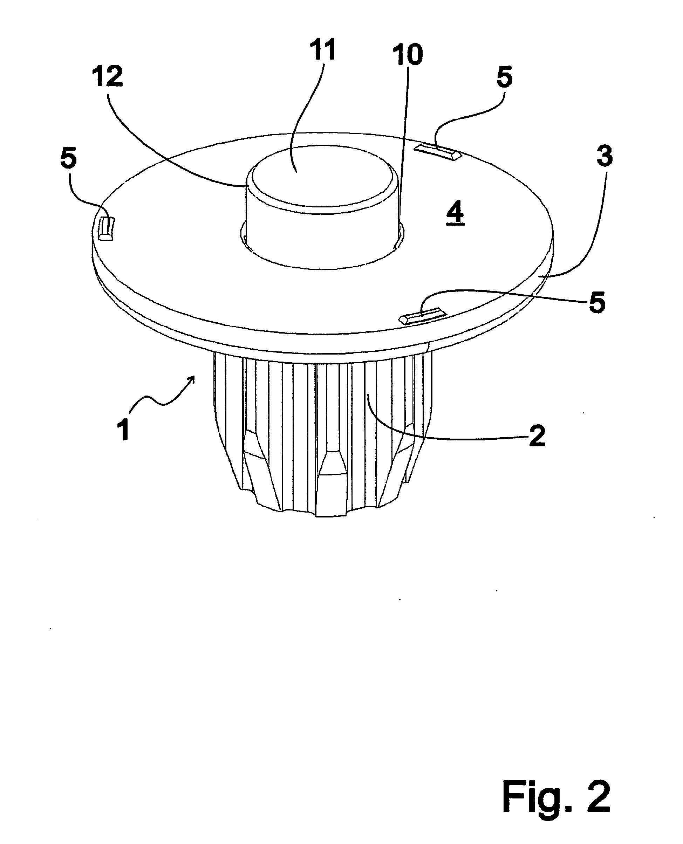

Fig. 2 zeigt in einer perspektivischen Ansicht das erste Ausführungsbeispiel in einer vorkonfektionierten Anordnung mit in die Aufnahmevertiefung 6 eingefügtem Presskörper 11. Beim durch das zentrierende Zusammenwirken der Konusflächen 10, 12 erleichterten Einfügen des Presskörpers 11 in die Aufnahmevertiefung 6 greifen die Randrippen 9 in den Presskörper 11 ein, so dass der Presskörper 11 mechanisch mit dem Befestigungsteil 1 verbunden ist. Dabei steht der Presskörper 11 über die plane außenseitige Oberfläche 4 vor, wobei das überstehende Volumen so eingerichtet ist, dass es geringfügig kleiner als das zwischen dem umlaufenden Rand des Bundtellers 3 und der Oberseite der Abstandhalter 5 aufgespannte Volumen ist. In dieser vorkonfektionierten Anordnung ist die Befestigungsanordnung problemlos als Schüttgut transportierbar.

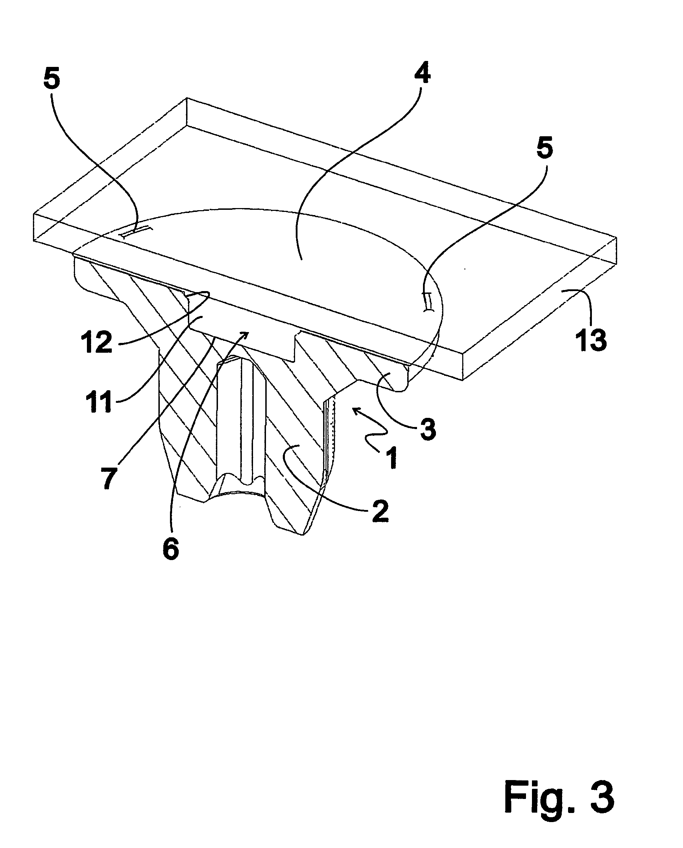

Fig. 3 zeigt in einer perspektivischen Schnittansicht das erste Ausführungsbeispiel nach einem Aufschmelzen des Presskörpers 11 bei einer verhältnismäßig hohen, zum Plastifizieren und Aktivieren des Schmelzklebers ausreichenden Temperatur in einer festen Verbindung mit einem beispielsweise als Glasplatte ausgebildeten Träger 13. Aus Fig. 3 ist ersichtlich, dass sich nach dem Aufschmelzen und Aktivieren des Schmelzklebers sowie dessen anschließender Verfestigung nach Auflegen des Befestigungsteiles 1 an den Träger 13 sich das in der vorkonfektionierten Anordnung über die plane außenseitige Oberfläche 4 überstehende Volumen des Presskörpers 11 von dem Rand der Aufnahmevertiefung 6 bis zu dem außenseitigen Rand des Bundtellers 3 verteilt hat, wobei die von der planen außenseitigen Oberfläche wegweisenden erhabensten Seiten der Abstandhalter 5 an dem Träger 13 anliegen. Nunmehr ist die Befestigungsanordnung über eine flächige Klebeverbindung fest mit dem Träger 13 verbunden.

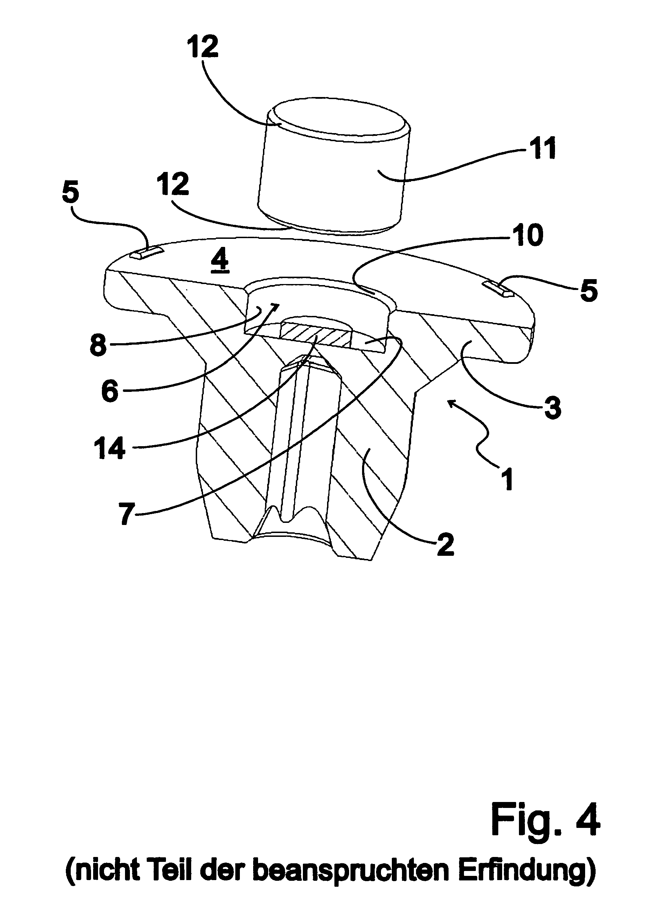

Fig. 4 zeigt in einer perspektivischen Schnittansicht eine Befestigungsanordnung (nicht Teil der beanspruchten Erfindung), wobei sich bei dem ersten Ausführungsbeispiel Fig. 1 bis Fig. 3 sowie bei dem zweiten Ausführungsbeispiel gemäß Fig. 4 entsprechende Elemente mit den gleichen Bezugszeichen versehen und im weiteren nicht näher erläutert sind. Bei der Befestigungsanordnung gemäß Fig. 4 ist die seitliche Innenrand 8 glattwandig ausgebildet, wobei der Innendurchmesser der Aufnahmevertiefung 8 geringfügig größer als der Außendurchmesser des Presskörpers 11 ist. Als Haltestruktur ist bei dieser Befestigungsanordnung ein Klebepunkt 14 aus einem bei Raumtemperatur aushärtendem Klebstoff vorgesehen, der auf die bodenseitige Innenwand 7 aufgebracht ist. Zum Verbinden des Presskörpers 11 mit dem Befestigungsteil 1 wird der Presskörper 11 bei einem noch klebefähigen Klebepunkt 14 in die Aufnahmevertiefung 6 eingefügt und dort belassen, bis die Klebeverbindung zwischen dem Befestigungsteil 1 und dem Presskörper 11 so ausreichend fest ist, dass der Presskörper 11 bei den der hiermit erfolgten Vorkonfektionierung nachfolgenden Handhabungsmaßnahmen in der Aufnahmevertiefung 6 verbleibt.

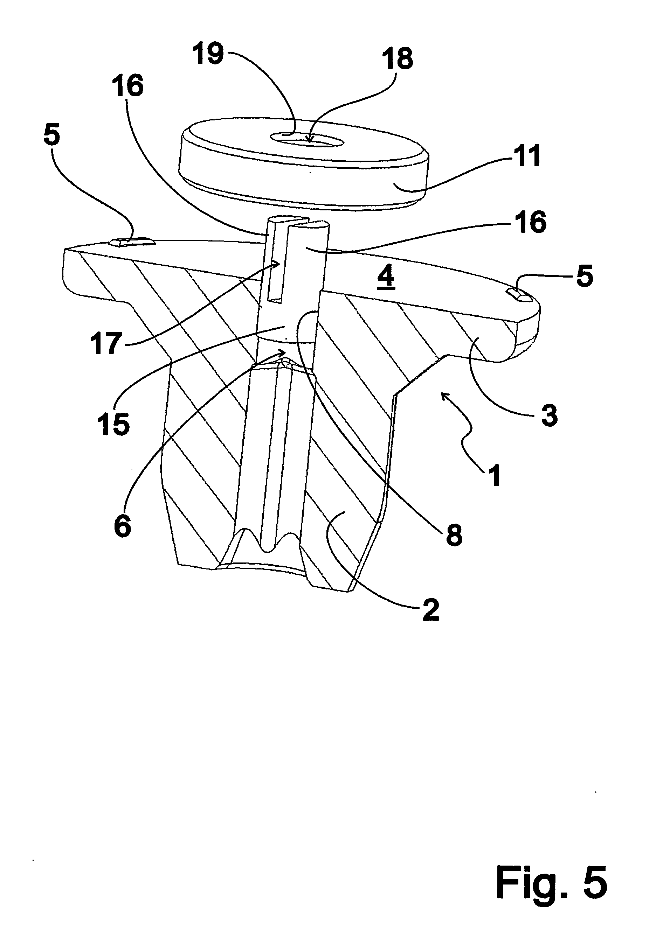

Fig. 5 zeigt in einer perspektivischen Schnittansicht ein zweites Ausführungsbeispiel einer erfindungsgemäßen Befestigungsanordnung, wobei sich bei dem ersten Ausführungsbeispiel gemäß Fig. 1 bis Fig. 3, der Befestigungsanordnung gemäß Fig. 4 und dem zweiten Ausführungsbeispiel gemäß Fig. 5 entsprechende Elemente mit den gleichen Bezugszeichen versehen und im weiteren nicht näher erläutert sind. Das zweite Ausführungsbeispiel gemäß Fig. 5 verfügt als Haltestruktur über einen Haltestift 15, der in der Darstellung gemäß Fig. 5 mit einem einen massiven Abschnitt aufweisenden Ende in die Aufnahmevertiefung 6 eingefügt und dort aufgrund Kraftschluss mit der seitlichen Innenwand 8 gegen Herausfallen gesichert ist. An dem dem massiven Abschnitt gegenüberliegenden Ende ist der Haltestift 15 mit zwei Federschenkeln 16 ausgebildet, zwischen denen zum Einfedern ein Zwischenraum 17 belassen ist.

Der Presskörper 11 ist bei dem zweiten Ausführungsbeispiel gemäß Fig. 5 mit einer sich zwischen den stirnseitigen Deckflächen erstreckenden Stiftausnehmung 18 ausgebildet, wobei die zu den Deckflächen weisenden Ränder jeweils mit einer nach innen geneigten Konusfläche 19 ausgebildet sind, um das Einführen der Federschenkel 16 zu vereinfachen. In vorkonfektionierter Anordnung ist bei dem Ausführungsbeispiel gemäß Fig. 5 der Presskörper 11 auf den Haltestift 15 aufgesteckt und in Anlage an die plane außenseitige Oberfläche 4 gehalten.

Zum Verbinden der Befestigungsanordnung gemäß dem in Fig. 5 dargestellten Ausführungsbeispiel mit einem in Fig. 5 nicht dargestellten Träger werden der Träger und die Befestigungsanordnung bei aufgeschmolzenem Presskörper 11 in Verbindung gebracht, wobei sich der Haltestift 15 soweit axial in die Aufnahmevertiefung 6 versenkt, dass die über die plane außenseitige Oberfläche 4 überstehende Stirnseiten der Federschenkel 16 in der Ebene der erhabensten Bereiche der Abstandhalter 5 liegt.

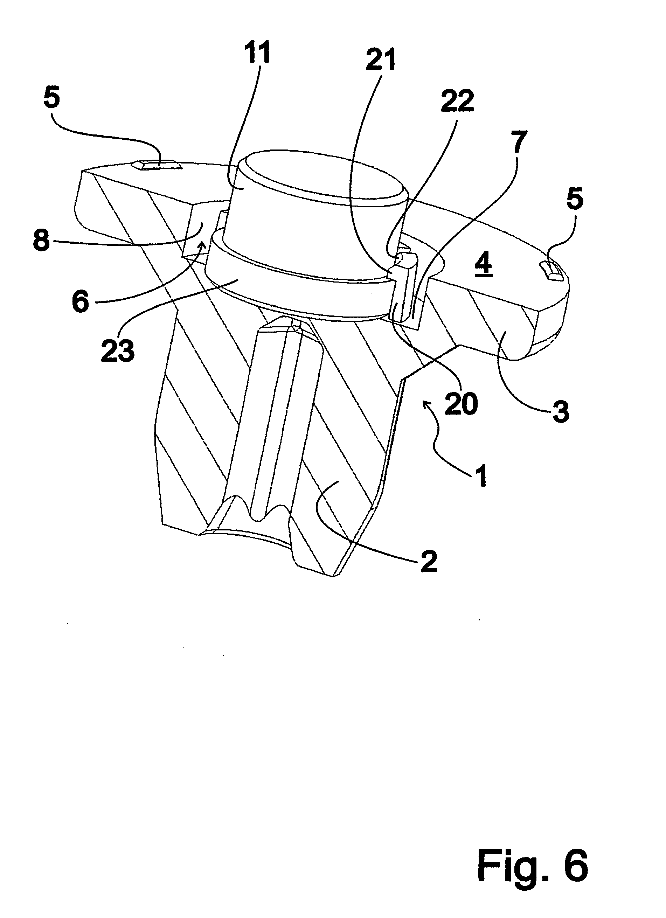

Fig. 6 zeigt in einer perspektivischen Schnittansicht ein drittes Ausführungsbeispiel einer efindungsgemäßen Befestigungsanordnung, wobei sich bei dem ersten Ausführungsbeispiel gemäß Fig. 1 bis Fig. 3, der Befestigungsanordnung gemäß Fig. 4, dem zweiten Ausführungsbeispiel gemäß Fig. 5 und dem dritten Ausführungsbeispiel gemäß Fig. 6 entsprechende Elemente mit den gleichen Bezugszeichen versehen und im weiteren nicht näher erläutert sind. Bei dem dritten Ausführungsbeispiel gemäß Fig. 6 verfügt die Haltestruktur über eine Anzahl von sich axial erstreckende und ringförmig in einem radialen Abstand von der seitlichen Innenwand 8 angeordnete Haltezungen 20, die mit einem Ende an der bodenseitigen Innenwand 7 angeformt sind. An dem von der bodenseitigen Innenwand 7 wegweisenden Ende weisen die Haltezungen 20 jeweils eine radial nach innen ausgerichtete Rastnase 21 auf, an denen jeweils innenseitig eine nach innen angestellte Konusfläche 22 ausgebildet ist.

Bei dem dritten Ausführungsbeispiel gemäß Fig. 6 ist der Presskörper 11 in einem axialen Endbereich mit einem umfänglich umlaufenden Ringbund 23 ausgebildet, der in seiner radialen Dimension an die Rastnasen 21 angepasst ist. Zur Vorkonfektionierung der Befestigungsanordnung ist bei dem in Fig. 6 dargestellten dritten Ausführungsbeispiel der Presskörper 11 mit dem Ringbund 23 in die Aufnahmevertiefung 6 einfügbar, bis die Rastnasen 21 den eine zu den Rastnasen 21 komplementäre Gegenstruktur bildenden Ringbund 23 hintergreifen und dadurch den Presskörper 11 mit dem Befestigungsteil 1 verbinden.

## Patentansprüche

1. Befestigungsanordnung mit einem Befestigungsteil, das über einen eine plane außenseitige Oberfläche aufweisenden Befestigungsabschnitt verfügt, und mit einem Schmelzkleber, der zum Befestigen des Befestigungsteiles mit einem Träger aufschmelzbar und flächig mit der planen außenseitigen Oberfläche des Befestigungsteiles sowie dem Träger verbindbar ist, wobei das Befestigungsteil eine in Richtung der planen außenseitigen Oberfläche offene Aufnahmevertiefung aufweist und wobei der Schmelzkleber als ein Presskörper ausgebildet ist, der in die Aufnahmevertiefung einfügbar ist, wobei im Bereich der Aufnahmevertiefung (6) eine Haltestruktur (8, 9; 15, 16, 18; 20, 21) ausgebildet ist, wobei die Gestalt des Presskörpers so an die Haltestruktur (8, 9; 15, 16, 18; 20, 21) angepasst ist, dass der Presskörper (11) mit dem Befestigungsteil (1) verbindbar ist, und wobei die Haltestruktur wenigstens ein Teil der seitlichen Innenwand (8) der Aufnahmevertiefung (6) ist, **dadurch gekennzeichnet, dass** die seitliche Innenwand (8) eine Anzahl von nach innen vorstehenden Rippen (9) aufweist, die beim Einfügen des Presskörpers in die Aufnamevertiefung in den Presskörper (11) eingreifen, dass ein an eine plane außenseitige Oberfläche (4) angrenzender Rand der Aufnahmevertiefung (6) als nach innen angeschrägte Konusfläche (10) ausgebildet ist und dass der Presskörper (11) an seinen stirnseitigen Rändern mit nach außen angeschrägten Konusflächen (12) ausgebildet ist.

2. Befestigungsanordnung mit einem Befestigungsteil, das über einen eine plane außenseitige Oberfläche aufweisenden Befestigungsabschnitt verfügt, und mit einem Schmelzkleber, der zum Befestigen des Befestigungsteiles mit einem Träger aufschmelzbar und flächig mit der planen außenseitigen Oberfläche des Befestigungsteiles sowie dem Träger verbindbar ist, wobei das Befestigungsteil eine in Richtung der planen außenseitigen Oberfläche offene Aufnahmevertiefung aufweist und wobei der Schmelzkleber als ein Presskörper ausgebildet ist, der in die Aufnahmevertiefung einfügbar ist, wobei im Bereich der Aufnahmevertiefung (6) eine Haltestruktur (8, 9; 15, 16, 18; 20, 21) ausgebildet ist und wobei die Gestalt des Presskörpers so an die Haltestruktur (8, 9; 15, 16, 18; 20, 21) angepasst ist, dass der Presskörper (11) mit dem Befestigungsteil (1) verbindbar ist, **dadurch gekennzeichnet, dass** die Haltestruktur eine Anzahl von an einer bodenseitigen Innenwand (7) der Aufnahmevertiefung (6) angesetzten Haltezungen (20) aufweist.

3. Befestigungsanordnung nach Anspruch 2, **dadurch gekennzeichnet, dass** die Haltezungen (20) jeweils eine Rastnase (21) und der Presskörper (11) eine zu den Rastnasen (21) komplementäre Gegenstruktur (23) aufweist, wobei die Rastnasen (21) und die Gegenstruktur (23) miteinander in Eingriff bringbar sind.

4. Befestigungsanordnung mit einem Befestigungsteil, das über einen eine plane außenseitige Oberfläche aufweisenden Befestigungsabschnitt verfügt, und mit einem Schmelzkleber, der zum Befestigen des Befestigungsteiles mit einem Träger aufschmelzbar und flächig mit der planen außenseitigen Oberfläche des Befestigungsteiles sowie dem Träger verbindbar ist, wobei das Befestigungsteil eine in Richtung der planen außenseitigen Oberfläche offene Aufnahmevertiefung aufweist und wobei der Schmelzkleber als ein Presskörper ausgebildet ist, wobei im Bereich der Aufnahmevertiefung (6) eine Haltestruktur (8, 9; 15, 16, 18; 20, 21) ausgebildet ist und wobei die Gestalt des Presskörpers so an die Haltestruktur (8, 9; 15, 16, 18; 20, 21) angepasst ist, dass der Presskörper (11) mit dem Befestigungsteil (1) verbindbar ist, **dadurch gekennzeichnet, dass** die Haltestruktur einen axial teilweise in der Aufnahmevertiefung (6) verschiebbaren und dort sicherbaren Haltestift (15) aufweist und dass der Presskörper (11) mit einer Stiftausnehmung (18) ausgebildet ist, in die der Haltestift (15) einführbar ist.

## Claims

1. Fixing device having a fixing part which has a fixing portion having a plane outer surface, and having a hot-melt adhesive which can be melted to fix the fixing part to a carrying object and which can be connected over an area to the plane outer surface of the fixing part and to the carrying object, the fixing part having a receiving depression which is open in the direction of the plane outer surface and the hot-melt adhesive taking the form of a pressed body which can be inserted in the receiving depression, a retaining structure (8, 9; 15, 16, 18; 20, 21) being formed in the region of the receiving depression (6), the configuration of the pressed body being matched to the retaining structure 8, 9; 15, 16, 18; 20, 21) in such a way that the pressed body (11) can be connected to the fixing part (1), and the retaining structure being at least a part of the lateral inner wall (8) of the receiving depression (6), **characterised in that** the lateral inner wall (8) has a plurality of inwardly projecting ribs (9) which engage in the pressed body (11) when the said pressed body is inserted in the receiving depression, **in that** an edge of the receiving depression (6) which adjoins a plane outer surface (4) takes the form of an inwardly bevelled conical surface (10), and **in that** the pressed body (11) is formed to have outwardly bevelled conical surfaces (12) at its end edges.

2. Fixing device having a fixing part which has a fixing portion having a plane outer surface, and having a hot-melt adhesive which can be melted to fix the fixing part to a carrying object and which can be connected over an area to the plane outer surface of the fixing part and to the carrying object, the fixing part having a receiving depression which is open in the direction of the plane outer surface and the hot-melt adhesive taking the form of a pressed body which can be inserted in the receiving depression, a retaining structure (8, 9; 15, 16, 18; 20, 21) being formed in the region of the receiving depression (6) and the configuration of the pressed body being matched to the retaining structure 8, 9; 15, 16, 18; 20, 21) in such a way that the pressed body (11) can be connected to the fixing part (1), **characterised in that** the retaining structure has a plurality of retaining tongues (20) which are attached to a bottom inner wall (7) of the receiving depression (6).

3. Fixing device according to claim 2, **characterised in that** the retaining tongues (20) each have a latching nose (21) and the pressed body (11) has a mating structure (23) complementary to the latching noses (21), the latching noses (21) and the mating structure (23) being able to be brought into engagement with one another.

4. Fixing device having a fixing part which has a fixing portion having a plane outer surface, and having a hot-melt adhesive which can be melted to fix the fixing part to a carrying object and which can be connected over an area to the plane outer surface of the fixing part and to the carrying object, the fixing part having a receiving depression which is open in the direction of the plane outer surface and the hot-melt adhesive taking the form of a pressed body, a retaining structure (8, 9; 15, 16, 18; 20, 21) being formed in the region of the receiving depression (6) and the configuration of the pressed body being matched to the retaining structure 8, 9; 15, 16, 18; 20, 21) in such a way that the pressed body (11) can be connected to the fixing part (1), **characterised in that** the retaining structure has a retaining pin (15) part of which can be displaced axially in the receiving depression (6) and can be secured therein, and **in that** the pressed body (11) is formed to have a pin recess (18) into which the retaining pin (15) can be introduced.

## Revendications

1. Dispositif de fixation comprenant un élément d'ancrage en position, qui comporte une portion de fixation présentant une surface plane sur son côté extérieur et comprenant une pastille de substance adhésive fusible qui, pour assurer la fixation du dispositif de fixation sur un élément faisant office de support, est destinée à être raccordée par fusion et sur toute l'étendue de sa surface à la surface plane extérieure de l'élément d'ancrage en position ainsi qu'à l'élément faisant office de support, dans lequel l'élément d'ancrage en position comporte une dépression de réception ouverte dans la direction de la direction de la surface plane située sur le côté extérieur et dans lequel la pastille de substance adhésive fusible se présente sous la forme d'un élément à appliquer par pression, qui est destiné à être inséré dans la dépression de réception, dans lequel il est prévu, dans la zone de la dépression de réception (6), une structure de retenue (8,9 ; 15, 16, 18 ; 20, 21), dans lequel la configuration de l'élément à appliquer par pression est adaptée à la structure de retenue (8,9 ; 15, 16, 18 ; 20, 21) dans des conditions telles que l'élément à appliquer par pression (11) peut être raccordé à l'élément d'ancrage en position (1) et dans lequel la structure de retenue est constituée par au moins une partie de la paroi intérieure latérale (8) de la dépression de réception (6), **caractérisé en ce que** la paroi intérieure latérale (8) est pourvue d'un certain nombre de nervures (8) faisant saillie vers l'intérieur, qui, lors de l'insertion de l'élément à appliquer par pression dans la dépression de réception, viennent en prise d'encastrement dans l'élément à appliquer par pression (11), **en ce qu'**un bord de la dépression de réception (6), contigu à la surface extérieure plane (4), se présente sous la forme d'une face conique biseautée vers l'intérieur (10) et **en ce que** l'élément à appliquer par pression (11) comporte, au niveau de ses bords antérieurs, des faces coniques (12) biseautées vers l'extérieur.

2. Dispositif de fixation comprenant un élément d'ancrage en position, qui comporte une portion de fixation présentant une surface plane sur son côté extérieur et comprenant une pastille de substance adhésive fusible qui, pour assurer la fixation du dispositif de fixation sur un élément faisant office de support, est destinée à être raccordée par fusion et sur toute l'étendue de sa surface à la surface plane extérieure de l'élément d'ancrage en position ainsi qu'à l'élément faisant office de support, dans lequel l'élément d'ancrage en position comporte une dépression de réception ouverte dans la direction de la direction de la surface plane située sur le côté extérieur et dans lequel la pastille de substance adhésive fusible se présente sous la forme d'un élément à appliquer par pression, qui est destiné à être inséré dans la dépression de réception, dans lequel il est prévu, dans la zone de la dépression de réception (6), une structure de retenue (8,9 ; 15, 16, 18 ; 20, 21), dans lequel la configuration de l'élément à appliquer par pression est adaptée à la structure de retenue (8,9 ; 15, 16, 18 ; 20, 21) dans des conditions telles que l'élément à appliquer par pression (11) peut être raccordé à l'élément d'ancrage en position (1), **caractérisé en ce que** la structure de retenue est munie d'un certain nombre de languettes de retenue (20) disposées attenantes à la paroi intérieure côté fond (7) de la dépression de réception (6).

3. Dispositif de fixation selon la revendication 2, **caractérisé en ce que** les languettes de retenue (20) comportent respectivement un ergot d'accrochage (21) et **en ce que** l'élément à appliquer par pression (11) est muni d'une structure d'accouplement conjuguée agencée pour venir en correspondance d'accouplement avec les ergots d'accrochage (21), les ergots d'accrochage (21) et la structure d'accouplement conjuguée (23) étant en l'occurrence destinés à être respectivement amenés en prise d'accrochage les uns avec l'autre.

4. Dispositif de fixation comprenant un élément d'ancrage en position, qui comporte une portion de fixation présentant une surface plane sur son côté extérieur et comprenant une pastille de substance adhésive fusible qui, pour assurer la fixation du dispositif de fixation sur un élément faisant office de support, est destinée à être raccordée par fusion et sur toute l'étendue de sa surface à la surface plane extérieure de l'élément d'ancrage en position ainsi qu'à l'élément faisant office de support, dans lequel l'élément d'ancrage en position comporte une dépression de réception ouverte dans la direction de la direction de la surface plane située sur le côté extérieur et dans lequel la pastille de substance adhésive fusible se présente sous la forme d'un élément à appliquer par pression, qui est destiné à être inséré dans la dépression de réception, dans lequel il est prévu, dans la zone de la dépression de réception (6), une structure de retenue (8,9 ; 15, 16, 18 ; 20, 21), dans lequel la configuration de l'élément à appliquer par pression est adaptée à la structure de retenue (8,9 ; 15, 16, 18 ; 20, 21) dans des conditions telles que l'élément à appliquer par pression (11) peut être raccordé à l'élément d'ancrage en position (1), **caractérisé en ce que** la structure de retenue comporte une broche de retenue (15), destinée à être partiellement déplacée en translation dans le plan axial dans la dépression de réception (6) et à être bloquée en position dans celle-ci, et **en ce que** l'élément à appliquer par pression (11) comporte une ouverture d'insertion de broche (18), dans laquelle la broche de retenue (15) est destinée à être emmanchée.
